# EUROPEAN PATENT SPECIFICATION

(11) **EP 3 732 339 B1**
(45) Date of publication and mention of the grant of the patent: **09.08.2023**
(21) Application number: 17835854.5
(22) Date of filing: 24.12.2017
(51) Int. Cl.: E04F 10/08, E04F 10/10

(54) **HEAT AND/OR LIGHT REGULATING SYSTEM**
WÄRME- UND/ODER LICHTREGULIERUNGSSYSTEM
SYSTÈME DE RÉGULATION DE LA CHALEUR ET/OU DE LA LUMIÈRE

(43) Date of publication of application: 04.11.2020
(73) Proprietor: JMH Concepteur SLU, 17481 Sant Julia de Ramis (Girona) (ES)
(72) Inventor: HERNAN PEDROS, Jean Michel, 34160 Castries (FR)
(74) Representative: Mohammadian, Dario
(86) International application number: PCT/EP2017/084575
(87) International publication number: WO 2019/120594

(56) References cited:
- EP-A1- 1 964 990
- EP-A1- 2 905 401
- EP-A1- 3 124 716
- US-A1- 2010 139 872

## Description

### FIELD OF THE INVENTION

This invention relates to a heat and/or light regulating system and, in particular, a system for regulating the heat and/or light impinging the external area of a structure, such as a building.

### BACKGROUND

Solar protection systems such as pergolas exist that are used to protect terraces, plazas or paths in a park, for example. Pergolas are not built on buildings, since in these cases awnings are used for solar protection. However, the problem with awnings is that they only protect from the sun from above but not from the sides.

Solar rays not only illuminate but also transfer heat, however situations exist where users need to regulate these parameters independently from eachother. For example, it might be desirable to block the heat of direct sun light, however at the same time allow as much luminosity through. Conversely, it might be desirable to allow as much heat through, however minimize the pass-through luminosity. However, existent solar protection systems have the disadvantage that they are designed to protect a certain surface for a certain time because they are fixed with respect to the sun, and they therefore loose effectiveness with the movement of the sun. Moreover, blinds have the disadvantage that they must be rolled down entirely during exposure to the sun, so that the interior is completely dark and it is necessary to turn on the light in order to be in a room. Additionally, most existent systems are rigid and inflexible to variations in solar position and radiation, such as variations caused by different solar impinging angles, or drifting clouds. One such system is given in publication EP-A-3 124 716 referring to a movable pergola configured to move in a parallel direction to the face of the building it gives shade to, wherein the pergola comprises travel means enabling it to move in a lateral direction to the side of the building. Another such system is given in publication EP-A-2 905 401 referring to a pergola configured to move in a longitudinal direction only, incorporating means for preventing transversal movement of the pergola as its purpose is to elongate it longitudinally only.

Therefore a need exists to effectively solve the abovementioned problems.

### SUMMARY

It is therefore an object of the present invention to provide solutions to the above mentioned problems. In particular, it is an object of the invention to provide a novel heat and/or light regulating system for buildings that is user-friendly, allowing the user to globally regulate the amount of heat and/or light being blocked, or conversely being allowed through, in a variable and flexible manner.

This is accomplished by a system as defined in the independent claim which permits the flexible and easy heat and/or light regulation discussed. The system is designed to be attached to the structure it serves, such as a building. The system comprises at least one pergola moveably coupled to a displacement means acting as a fixed support. The displacement means is coupled to the structure allowing the free and easy displacement of the pergola in multiple directions. This allows increasing or decreasing the area of coverage of the shade according to circumstances. Further aspects of the system are defined in the dependent claims, for example, the displacement means permits the easy storage of the pergola, which can be retracted even into the structure. For large surfaces, the system is configured so as to permit the same flexibility using a plurality of overlapping pergolas.

Hence, some or all of the aforementioned problems are resolved as defined by the accompanying claims.

### BRIEF DESCRIPTION OF THE DRAWING(S)

The features and advantages of the present invention will become more apparent from the detailed description set forth below when taken in conjunction with the drawings in which like reference characters identify corresponding elements in the different drawings. Corresponding elements may also be referenced using different characters.
**FIGs. 1** **and** **7** depict a first example regulating system (not covered by the claimed invention).
**FIGs. 2** **and** **8** depict a second example regulating system (not covered by the claimed invention).
**FIGs. 3** **and** **9** depict a third example regulating system.
**FIGs. 4** **and** **10** depict a fourth example regulating system.
**FIG. 5** depicts a fifth example regulating system.
**FIG. 6** depicts a sixth example regulating system (not covered by the claimed invention).
**FIG. 11** depicts a seventh example regulating system.
**FIG. 12** depicts a second example travel means of the regulating system.
**FIG. 13** depicts a second example travel means of the regulating system.
**FIG. 14** depicts a second example travel means of the regulating system.

### DETAILED DESCRIPTION OF THE INVENTION

The regulating system for heat and/or light regulation of the invention is configured to be coupled to the side of a structure, such as a building. The system allows flexibly regulating the amount of sun rays which are allowed through and those which will be blocked, thereby flexibly regulating the heat and/or light which is allowed through. The system comprises at least one displacement means and at least one moveable pergola detachably coupled to the at least one displacement means. The at least one displacement means is fixed to the side of the structure, and is configured, via a horizontal section comprising at least one crossing beam and at least one perpendicular beam, for enabling the displacement of the at least one moveable pergola in a perpendicular direction to the side of the structure, that is, away from the structure, as well as in the lateral direction to the side of the structure, that is, along the side of the structure

In one aspect, the at least one displacement means is configured to extend into, or on top, of the structure, either below or above the roof. This allows displacing the at least one pergola as close as necessary to the structure. It even allows the pergola to be abutted to the side of the structure, leaving no space underneath, and thereby acting as a window blind blocking sunlight into the interior of the structure. In this configuration the pergola is also advantageously stowed away, for storage.

The system is configured so that the moveable pergola is detachably coupled under the at least one displacement means. In this configuration, the pergola is hanging from the displacement means. One advantage is that it facilitates the movement of the pergola for the user due to reduced friction. Another advantage is that, from the point of view of a user sitting under the pergola, the displacement means remains hidden behind the pergola, which can be more visually pleasing for the users underneath. In another aspect, the at least one moveable pergola is detachably coupled over the at least one displacement means. In this configuration, the weight of the pergola is fully supported by the displacement means, thereby providing a safe support. Another advantage is that the coupling mechanism between the pergola and the displacement means may be simpler. Yet another advantage is that the dimensions of the displacement means may be overall smaller, however providing full pergola displacement, and therefore the same shade coverage.

The displacement means comprises at least two L-shaped sets of beams connected to each other via a crossing beam at a distal end of the structure, that is, the point furthest away from the building. Each set comprises one vertical beam connected to one perpendicular beam at the connecting ends of the beams thereby configuring an L-shape. At its non-connecting end, each vertical beam is fixed to the ground. At its connecting end, each perpendicular beam is coupled to the building. As mentioned, the two perpendicular beams may be coupled to the building at the side of the building, or extend into the building, above or below the roof. In another aspect, the two perpendicular beams are connected to eachother via a crossing beam, and the crossing beam is fixed to the side of the building.

The vertical section of the displacement means has an inverted U-shaped configuration comprising three beams, or may also comprise a frame of four beams. In either configuration, it is fixed to the ground to provide rigidity and stability to the whole configuration of the displacement means.

The top, or horizontal, section of the displacement means may have a U-shaped configuration on its side, and it may comprise three beams, or four beams structured as a frame. In either configuration, the crossing beam, which is the beam which runs parallel to the side of the building, either at its proximal or distal end, is configured to couple with the pergola allowing its lateral movement. The perpendicular beam, which is the beam which runs perpendicular to the side of the building, is configured to couple with the pergola allowing its perpendicular movement, towards or away from the building. Therefore, the at least one displacement means is configured to allow the displacement of the at least one moveable pergola in the lateral direction as well as in the perpendicular direction to the plane of the side of the structure.

As mentioned, the moveable pergola is configured for displacement along the beams of the displacement means. The at least one moveable pergola may comprise at least one section comprising heat regulating means for regulating impinging sun and/or wind, and at least one travel means configured for allowing the movement of the at least one heat regulating section. Each heat regulating section is formed by a frame supporting the heat regulating means, the frame comprising four beams, and the travel means is configured in at least one of the four beams of the frame.

For the case of a heat regulating section on the superior side of the pergola, the at least one section is a horizontal section, and the heat regulating means is configured for regulating sun and/or wind impinging from a substantially vertical direction. In this case, the travel means of the horizontal section is configured in any one parallel beams of the frame. For additional safety and movement facility, it can be configured in two, three, or on all four beams. Therefore the horizontal section may be displaced in both perpendicular and lateral directions.

For the case of a heat regulating section on the lateral side of the pergola, the at least one section is a vertical section, and the heat regulating means is configured for regulating sun and/or wind impinging from a substantially lateral direction. The at least one vertical section may be arranged such that its plane is parallel or perpendicular to the plane of the side of the structure thereby providing coverage at the sides of the heat regulating system. Hence, it may be configured to provide coverage from the lateral or distal ends of the heat regulating system.

The travel means of the vertical section is configured in the beam of the frame in contact with the ground, for displacement along the ground. In case independent movement is desired with respect to the horizontal section, the travel means in the at least one beam of the frame in contact with the displacement means, for displacement along the horizontal section beam. Therefore the vertical section may be displaced in both perpendicular and lateral directions.

The travel means comprise wheels and rails with complementary profiles. In one aspect, the rail of the travel means of the at least one vertical section has a convex profile, whereas the rail of the travel means of the horizontal section is a hollow rail that allows the insertion of the wheels and a hanging fastening of the horizontal section. The moving end of the horizontal section comprises first and second travel means that engage with complementary support elements of the displacement means. In order to facilitate the displacement of the at least one vertical section, the heat regulating system further comprises at least one ground rail for facilitating the movement of the travel means of the at least one vertical section on the ground.

Although the heat regulating system may comprise only a single horizontal section, or a single vertical section, it is commonly configured with at least one horizontal section and at least one vertical section. The heat regulating system is configured so that the at least one moveable pergola comprises any combination of horizontal sections and vertical sections. In this manner, the heat and/or light regulation is optimized, as it can block impinging rays as the impinging angle varies throughout the day, and also covers any diagonally impinging rays.

In this configuration, the at least one vertical section is coupled to its respective horizontal section at an angle, and the travel means in the horizontal and vertical sections is configured to allow the combined movement of the sections together in the same direction, or the relative movement of the sections with respect to eachother in different directions. The angle may be any angle between 45° and 135°, although most commonly the angle is 90°.

The at least one moveable pergola comprises one single shared beam for coupling the horizontal section to the at least one vertical section, said beam preferably having a rectangular shape or being L-shaped. In a particular aspect, the system comprises one single beam that connects the two sections and that is shared by the two connecting ends of the sections. That is, this shared beam may belong either to the vertical section or to the horizontal section. Therefore, in one aspect the shared beam is part of the vertical section, whereas in other aspects it is part of the second section. By doing so, one beam is saved is saved from one of the frames and the assembly of the entire system is easier. In the aspects in which the vertical section and the horizontal section form a 90° angle it may be an L-shaped shared beam which on both ends of the L comprise the assembling means to couple it to the two first and second sections. Alternatively, the shared beam has a rectangular shape that has a first side coupled to the vertical section and a second side, which is contiguous to the first side, coupled to the horizontal section. And in still another alternative, the shared beam has a triangular shape to facilitate an inclination between the vertical section and the horizontal section. The triangular shape is adapted depending on the desired inclination. For reasons of assembly it is easier when the shared beam is comprised within the frame of the vertical section.

The two connecting ends of the regulating sections have mounting means in order to couple the vertical section to the horizontal section. These mounting means may comprise for example screws with nuts, threaded screws or nails and the corresponding openings for a strong or secure fastening. The preferred manner of coupling the two sections is via threaded screws.

The travel means of the vertical section may comprise one or more wheels that are fastened to the frame to allow movement. It may be a central wheel, two wheels separated from one another along a beam on the moving end or more wheels distributed along a beam on the moving end. The travel means may also be embedded in the beam on the moving end, protruding only a little in order to allow the movement without friction.

In order to prevent movements beyond the travel path a rail can be used to guide the travel means. This may be a rail with a convex profile having two protuberances on the edges of the rail between which the travel means are moving. It may also be a rail with a concave profile with one protuberance in the centre in which the travel means, which have a corresponding complementary profile, engage. The rail profile may be wheels with two protuberances on the edges, or a rail with a convex profile mounted along a beam on the moving end. The rail is mounted on the floor along the variable surface to be protected.

In the case of the travel means of the horizontal section, these further require a support system that fastens or supports the horizontal section. Preferably, the support system fastens the horizontal section via the travel means. The support system can be mounted onto a structural element that supports the weight of the regulating system, for example an additional third frame, and that covers the entire path of the possible range of movement. If the regulating system is mounted on a building, for example a private home, the support system may be on the wall of the building adjacent to the area to be protected. The support system comprises at least one mounting element that allows it to be fixed to the structural element, and a fastening element that allows coupling and supporting or fastening the second section of the system. Preferably, the fastening element also allows the movement of the system.

In one aspect, the travel means of the horizontal section may be a combination of wheels and rails or a combination of rails with complementary profiles. For example, they may be the same wheels and complementary rails that are used as travel means for the vertical section. However, for better fastening and security, it is preferable for the rail to have a hollow shape allowing the introduction of the wheels in the hollow space and the movement inside the rail. This hollow rail comprises on one first side a surface upon which the wheels travel, an opening on a second side opposite the first side in order to allow movement of the wheels, and third and fourth sides that are perpendicular to the first and second sides and which have the appropriate dimensions to house the wheels. The hollow rail may have a rectangular or substantially rectangular shape, but a triangular shape is also possible, wherein the second side is the opening or a curved shape in which the third and fourth sides are curved.

In an alternative aspect, wheels are used to move the regulating system instead of the hollow rail, but a guide bar is inserted into the hollow rail and is fastened by the same and can be extended along a part of the moving end or along its entirety. Then, the hollow rail may have even other shapes that depend on the shape of the guide bar and which ensure at the same time good fastening.

The horizontal section may comprise the travel means in different configurations. For example, the travel means may be directed downwards such that the corresponding rail lies below the second section and supports it. The travel means may also be on the same plane as the second section such that the corresponding rail is at the same height. Or the travel means can be directed upwards such that the corresponding rail lies above the second section and thus a hanging fastening is obtained. Preferably the hanging configuration is used since it is faster to assemble, reducing on-site assembly duration.

As mentioned, the heat and/or light may be dynamically regulated by increasing or decreasing the coverage of the at least one mobile pergola, as well as the position by moving the at least one mobile pergola laterally or perpendicularly. Further accuracy in the heat and/or light regulation is achieved by varying the characteristics of the heat regulating sections. In one aspect, the heat regulating means comprises a plurality of slats separated from eachother. The plurality of slats that are separated from one another provide solar protection, whereas they still allow the passage of sufficient light so that the protected area is not entirely dark. Each slat from the plurality of slats has an ellipsoidal or trapezoidal shape, preferably comprising wings on the ends. Each slat from the plurality of slats is fixed or moveable. Since the slats may be rotated around their longitudinal axis, further regulation can thus be achieved. For example, in case a low sun shines a lateral ray onto a user's face, this ray can be blocked simply by adjusting a single slat.

The plurality of slats comprises an amount of slats that varies with the size of the frame, with the desired distance between the slats or the size of the slats themselves. For example, there may be between 10 to 30 slats, although there may also be less than 10 or more than 30 slats. The spacing between the individual slats may vary from 5 to 10 cm. The slats may be fixed, that is, they may have a predefined configuration such that the construction of the sections is easier and automatic and the resulting product more economic. In such a case, the slats are assembled with a certain fixed inclination for better solar protection. For example, the fixed inclination of the slats may vary between 10° and 80° with respect to the plane of the frame, preferably between 35° and 55°. However, in other aspects of this invention they may also be moveable slats in order to allow an adjustment of solar protection during the day and according to the weather conditions. The mobility of the slats may be obtained with the usual techniques in the technical field and allows a moveable inclination that may vary between 0° and 90° with respect to the plane of the frame. The slats can be assembled horizontally, vertically or even diagonally. Both sections may comprise either fixed slats or mobile slats. It is also possible that one section comprises fixed slats whereas the other section comprises mobile slats.

In some aspects, the slats may have an ellipsoidal shape, whereas in other aspects the slats may have a trapezoidal shape with a wing of just a few centimeters, for example between 2 and 5 centimeters on each end in order to provide more solar protection. In any case, the slats are mounted onto the frame with common fixing means (not shown), such as for example nails, screws, nuts or others.

The trapezoidal-shaped slats are preferred because they comprise three openings for their mounting with screws. The advantage of the three openings with respect to two openings as in the case of ellipsoidal-shaped slats lies in a better fastening of the slats and therefore less movement thereof due to movement of the pergola or the wind. Also, if a screw breaks for any reason during assembly of the slats, there are still two more openings with which to fasten the slat.

In another aspect, the heat regulating means comprises a sheet of material with a plurality of openings. In yet another aspect, the heat regulating means comprises a sheet of material without openings. In another aspect, the heat regulating means comprises at least one solar panel for collecting impinging solar energy.

As mentioned, the coverage area may be increased as the system comprises a plurality of moveable pergolas of step-wise differing dimensions configured to be stored under, or partially overlapping, eachother. They may therefore be displaced to partially overlap eachother, or fully extend side-by-side, depending on the coverage area required. Due to their step-wise differing dimensions, they may be easily and conveniently stored under eachother.

The material of the regulating system is variable and it is possible to combine different materials. However, preferably a single material is used for the regulating sections and the slats. Useful materials for the regulating sections may be heat-stable plastic, wood, aluminum or other metallic materials. Useful materials for the slats may be heat-stable plastic, wood, aluminum or other metallic materials and even stone. Due to its availability, price and properties aluminum is preferred as the material of choice. The displacement means is made of any suitable material, such as aluminum, wood, heat-stable plastic or a combination thereof.

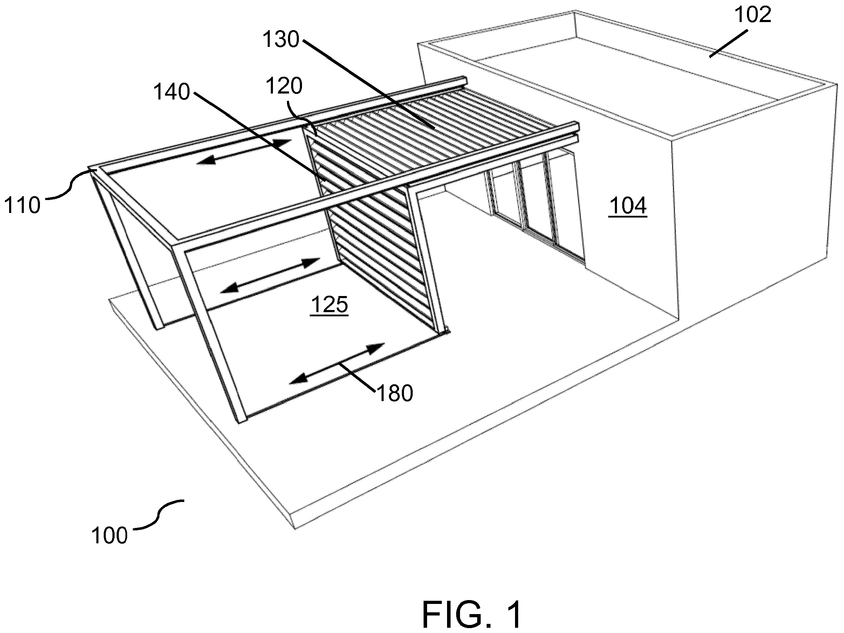

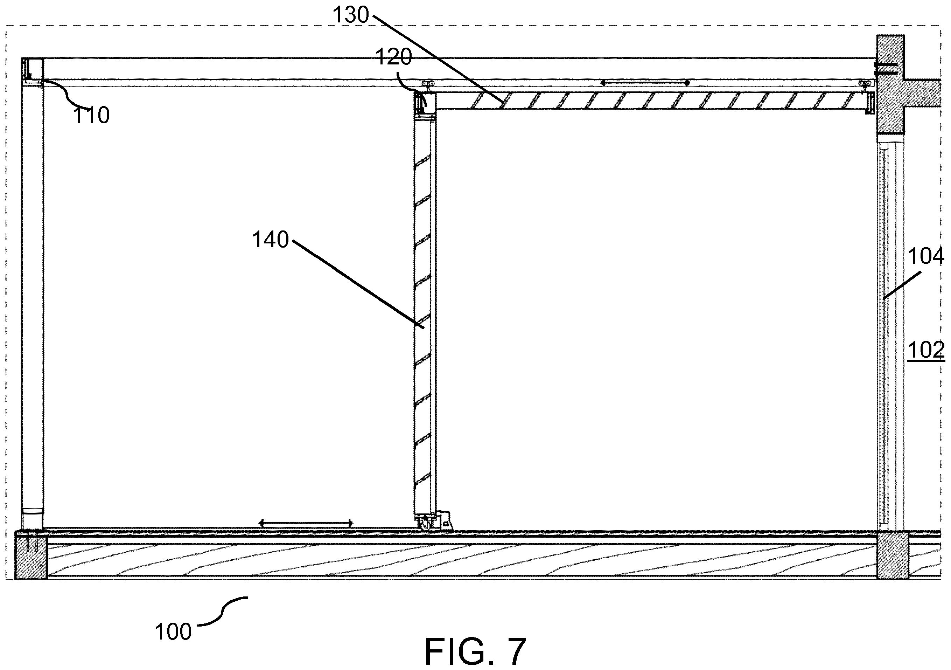

**FIG. 1** shows a first example regulating system 100 coupled to a structure 102, such as a building. The structure has at least one side 104, to which the regulating system is coupled to for providing heat and/or light regulation to an area inside the building or to an area under the regulating system. The regulating system comprises displacement means 110 and a mobile pergola 120. In this example, the regulating system is configured for displacing the mobile pergola 120 in a perpendicular direction 180 to the side of the structure, that is, away from the building. As can be seen, the mobile pergola is hanging from the displacement means, which is fixed to the side of the structure via its two perpendicular beams directly connected to the side of the structure. The mobile pergola 120 comprises a horizontal regulating section 130 coupled to a distal vertical regulating section 140 at a 90° angle. The mobile pergola may therefore be displaced perpendicularly along the ground 125 varying the shaded area provided by the horizontal and vertical sections from the proximal end of the building to the distal end until the end of the displacement means. **FIG. 7** depicts a lateral section of the first example regulating system 100 wherein it can be seen how the pergola 120 is supported underneath the displacement means 110.

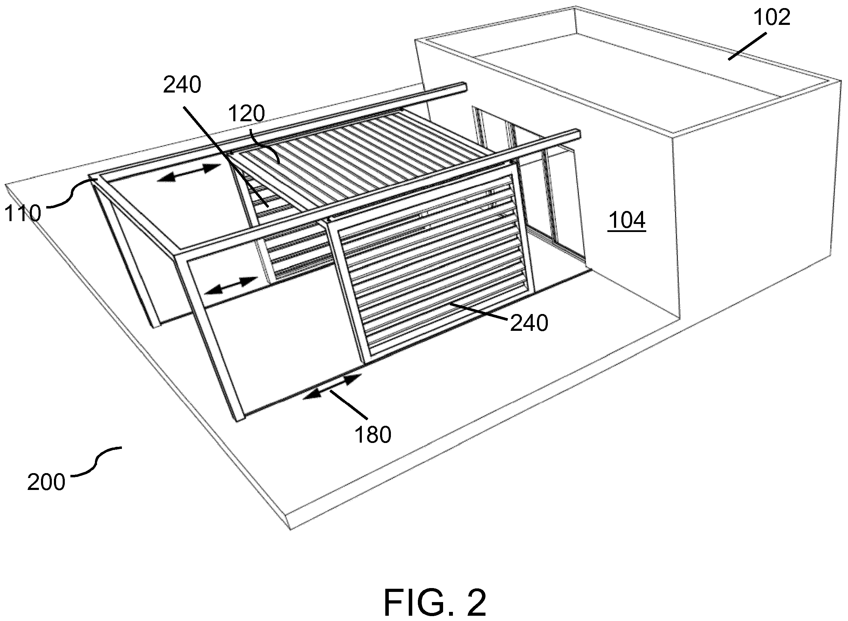

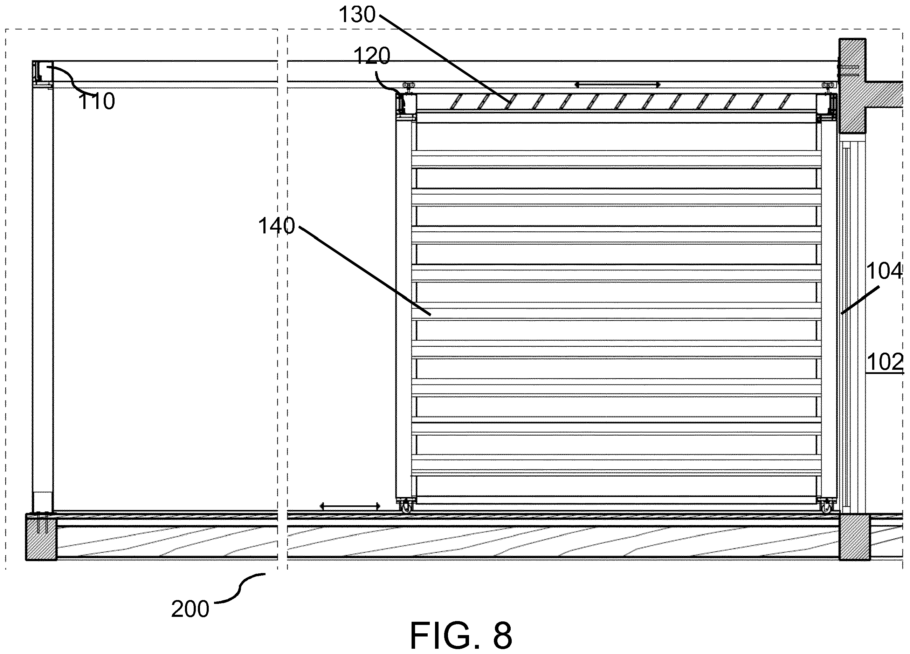

**FIG. 2** shows a second example regulating system 200. In this example, the pergola 120 comprises two lateral vertical sections 240, instead of the single vertical section of FIG. 1. The mobile pergola may therefore be displaced perpendicularly along the ground varying the shaded area provided by the horizontal and two lateral vertical sections from the proximal end of the building to the distal end until the end of the displacement means. **FIG. 8** depicts a lateral section of the second example regulating system 200 wherein it can be seen how the pergola 120 is supported underneath the displacement means 110.

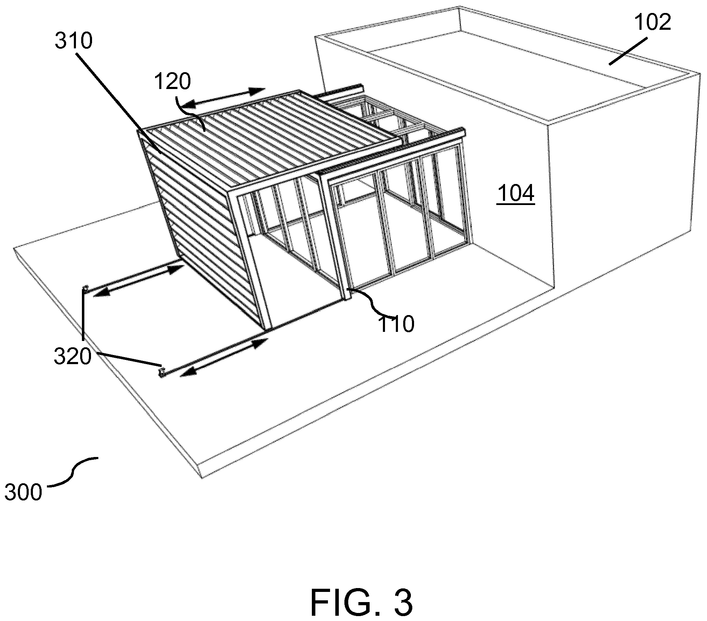

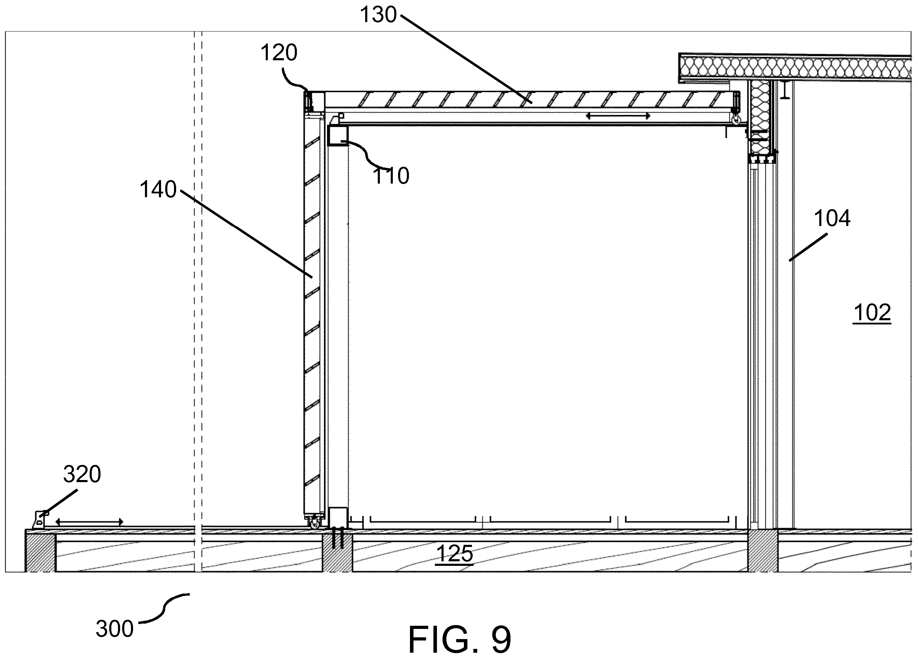

**FIG. 3** shows a third example regulating system 300. As can be seen, the mobile pergola 120 is on top of the displacement means 110, which supports the weight of the mobile pergola. Advantageously, the displacement means occupies much less space. The mobile pergola may therefore be displaced perpendicularly along the ground varying the shaded area from the proximal end of the building to the distal end until the end of the displacement means. Once reaching the end of the displacement means, the mobile pergola may be laterally displaced along the distal beam 310 of the displacement means until blocks 320 hinder further movement. **FIG. 9** depicts a lateral section of the third example regulating system 300 wherein it can be seen how the pergola 120 is supported on top of the displacement means 110. The displacement means 110 therefore occupies much less space, and is faster to deploy, as well as necessitating less material.

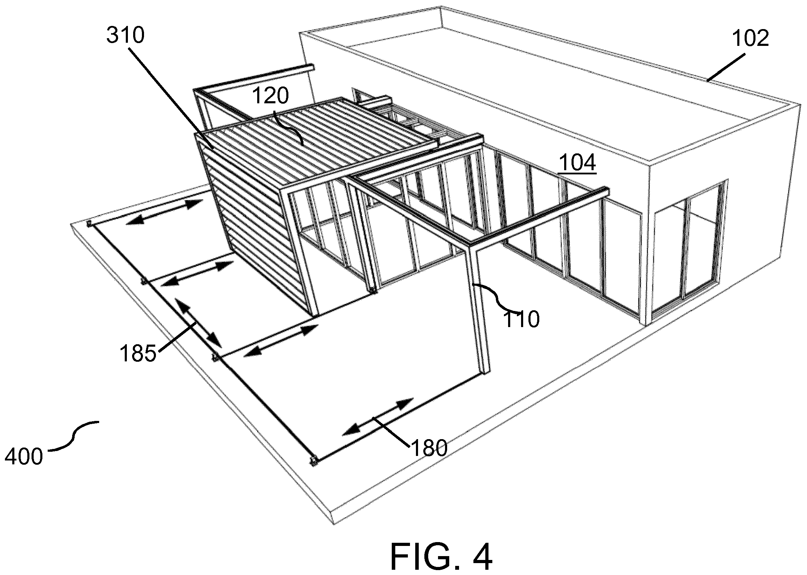

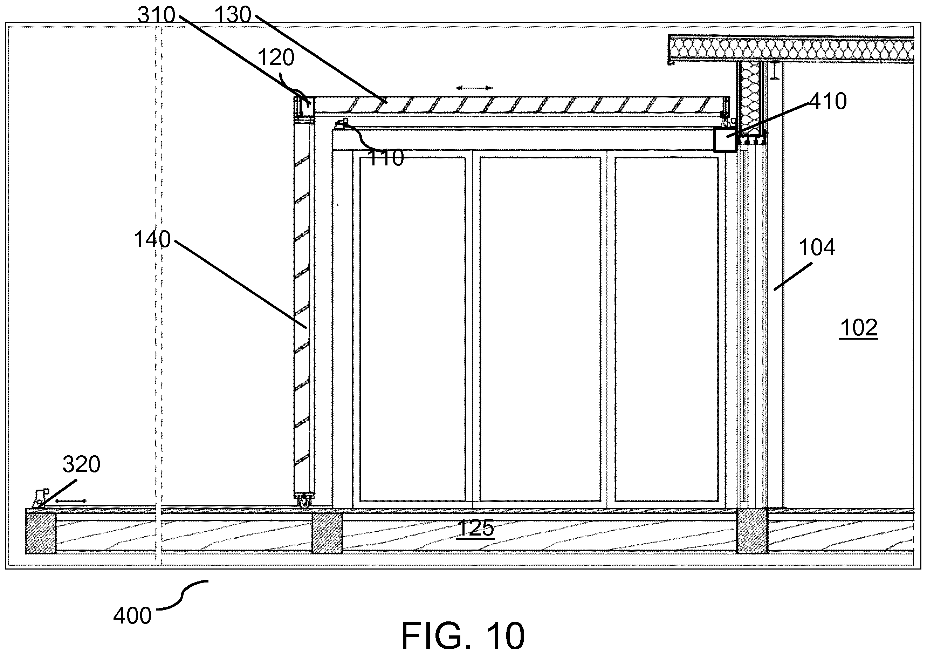

**FIG. 4** shows a fourth example regulating system 400. The displacement means 110 in this example comprises a plurality of L-shaped sets, forming a displacement grid. In its initial closed state, where the mobile pergola is closest to the building, it can be laterally displaced along the distal beams 310 of the displacement means. Only a first grid line is shown, however a second, or more, grid lines can be added, enlarging the coverage area. Therefore, the pergola may be displaced laterally 185 and perpendicularly 180 in order to provide shade in different zones. For the multiple pergola configuration, each pergola can be independently displaced to provide the required coverage. Optionally, for additional stability and safety, a proximal crossing beam 410 fixes the displacement means to the side of the structure providing a stronger and more rigid support for the pergola. **FIG. 10** depicts a lateral section of the fourth example regulating system 400 wherein it can be seen how the different horizontal 130 and vertical 140 sections of the pergola 120 may be independently laterally moved over distal beam 310 and proximal beam 410 of the displacement means 110.

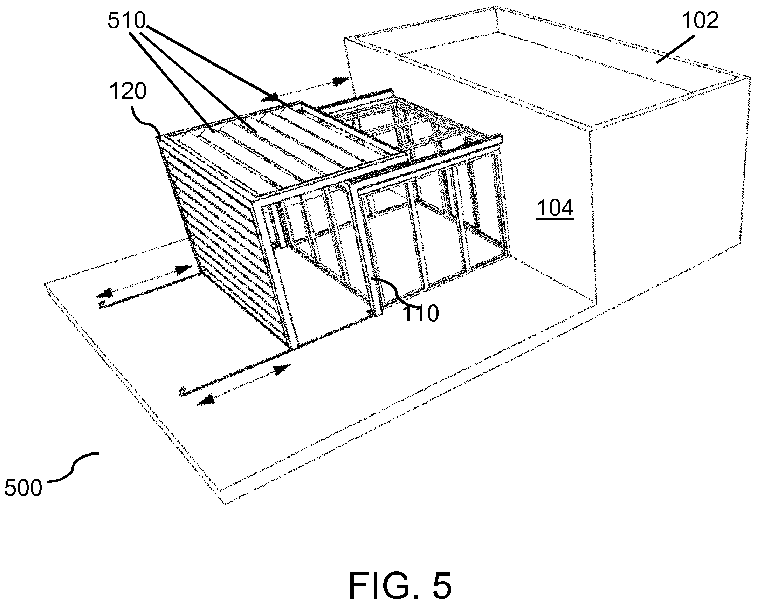

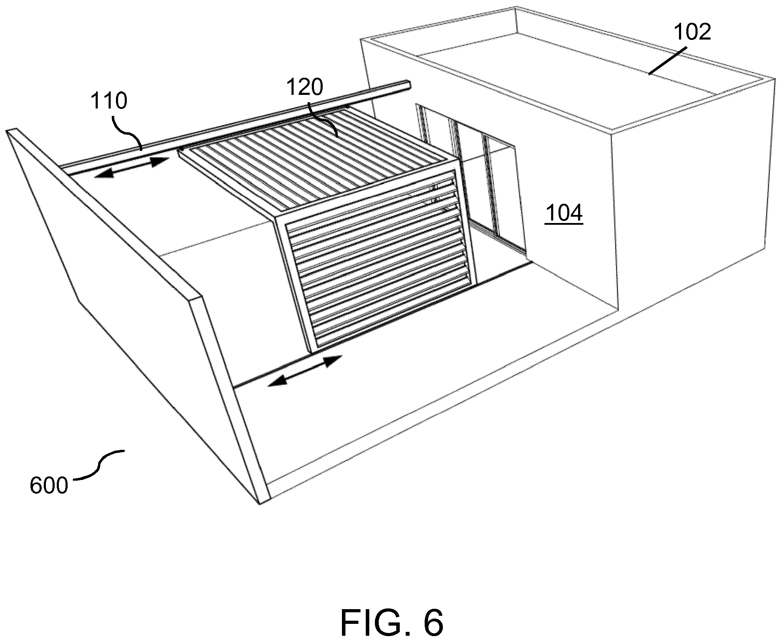

**FIG. 5** shows a fifth example regulating system 500, wherein the heat regulating means of the horizontal regulating section comprises solar panels 510. **FIG. 6** shows a sixth example regulating system 600, wherein the displacement means 110 comprises only a single beam, and the mobile pergola 120 is configured to be displaced along the single beam by means of a first travel means for moving along the single beam and a second travel means for moving along the ground.

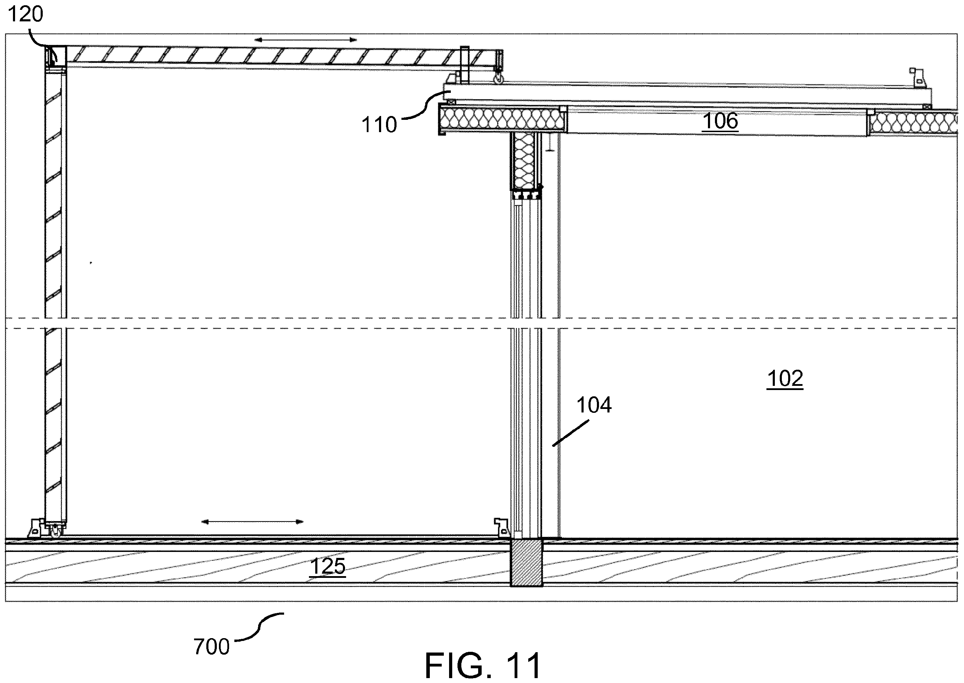

In another example, the displacement means 110 is configured over the structure 102, and the mobile pergola 120 is configured to be displaced on top of the displacement means, partially over the roof of the structure. The displacement means may also extend out of the structure. **FIG. 11** depicts a seventh example regulating system 700, wherein the structure comprises a luminaire 106, or opening, in its roof, allowing light into the interior of the structure. The displacement means 110 is configured over the structure 102, and the mobile pergola 120 is configured to be displaced on top of the displacement means, partially over the roof of the structure, in order to provide heat and/or light regulation for the luminaire opening. In both of these examples the displacement means may also extend out of the structure, as in the previous examples.

In a further embodiment, the regulating system comprises multiple stackable pergolas. In this case the system comprises a displacement means configured for supporting more than one mobile pergola. The second pergola is larger than the first pergola in order to be able to place the second pergola over the first pergola. It is thus possible to protect an entire surface, such as for example a terrace, from the sun, or to protect only part of it in a flexible manner, depending on the path of the sun. For larger spaces, it is possible to configure even more than two moveable pergolas, for example, three, four or five moveable pergolas.

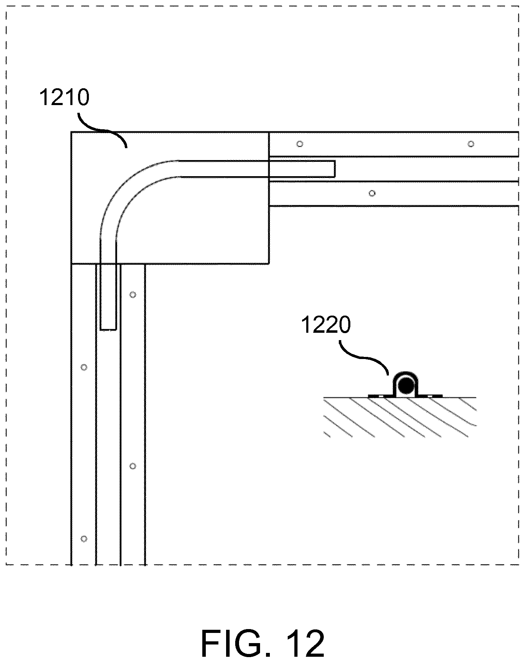

**FIG. 12** depicts guide means 1210 configured on the displacement means to aid the change of direction of the mobile pergola as it is moved laterally and perpendicularly. The guide means comprises a guide 1220 which allows the complementary wheels on the mobile pergola to roll easily and be manipulated in a user-friendly manner.

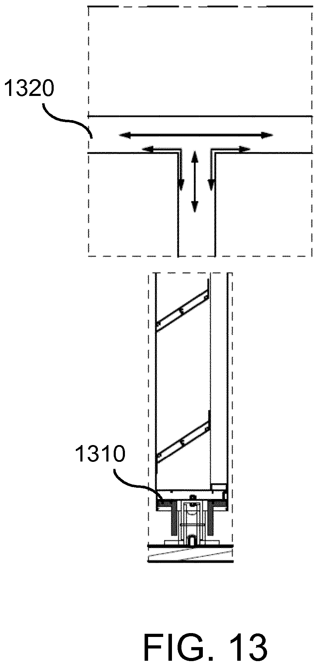

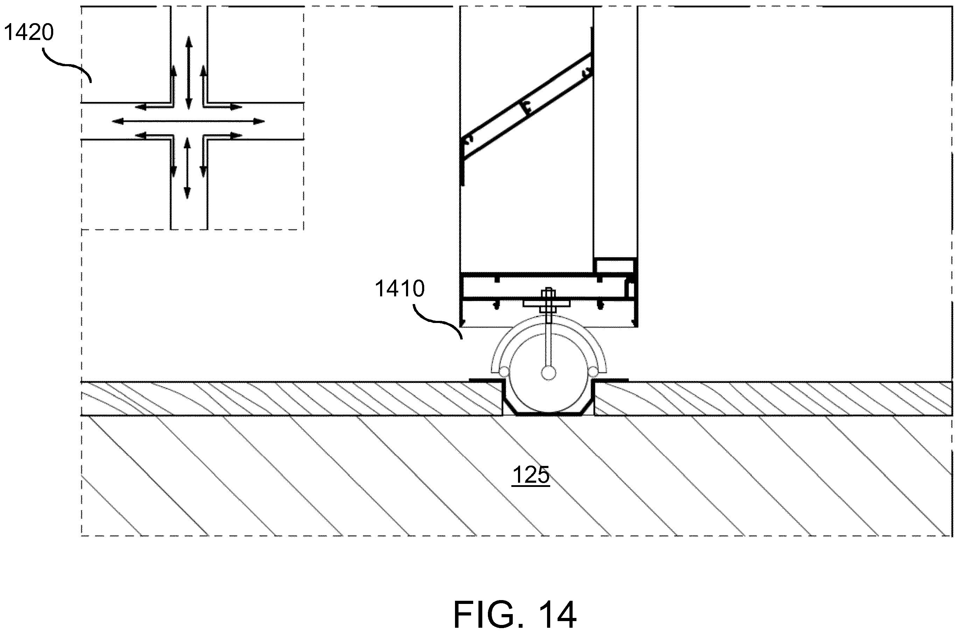

**FIG. 13** depicts one example wheel mechanism 1310 configured to be manually set to rotate 1320 either in a lateral manner or longitudinal manner. In this configuration the vertical section comprising this wheel mechanism can roll directly over the ground on which it is supported. **FIG. 14** depicts another example wheel mechanism 1410 which is configured to freely rotate 1420 in any direction, thereby facilitating the maneuverability for the user. In this configuration, the free moving wheel mechanism is aided by guide means in the floor in order to stay on its lateral or longitudinal course.

Therefore the different aspects of the invention described comprise a regulating system configured for providing a user-friendly and flexible heat and/or light regulating system, which can be adapted to different sun light strengths and impinging angles as the weather changes or along the time of the day, or changing seasons. The novel heat and/or light regulating system for buildings that is user-friendly allowing the user to globally regulate the amount of heat and/or light being blocked, or conversely being allowed through, in a variable and flexible manner.

What has been described comprises several example embodiments. Since it is not possible or feasible to describe all the variations of combinations and permutations of the inventive concept that would give rise to a large number of embodiments and redundant paragraphs, it is understood that the skilled artisan would derive these different possible permutations and combinations of the different embodiments and aspects described after a direct and objective reading of this disclosure. Therefore, the main aspects and embodiments have been described, understanding that they comprise the remaining combinations, variations and modifications, whilst they are comprised within the scope of protection defined by the claims. The skilled person would understand that the presented description of the embodiments does not limit the invention, nor do the drawings.

## Claims

1. A system (100) for heat and/or light regulation, the system being couplable to a side (104) of a structure (102), such as a building, the system comprising:
at least one displacement means (110) being fixable to the side of the structure; and
at least one moveable pergola (120) detachably coupled to the at least one displacement means;
wherein the at least one displacement means is configured for enabling the displacement of the at least one moveable pergola in a lateral direction (185) as well as in a perpendicular (180) direction to the side of the structure, the at least one displacement means comprising a top section, the top section comprising:
at least one crossing beam running parallel to the side of the structure and configured to couple with the pergola allowing its lateral movement; and
at least one perpendicular beam running perpendicular to the side of the structure and configured to couple with the pergola allowing its perpendicular movement.

2. The system according to claim 1, wherein the at least one displacement means (110) is configured to extend into, or on top, of the structure.

3. The system according to claim 2, wherein the at least one moveable pergola is detachably coupled under the at least one displacement means (110), or wherein the at least one moveable pergola is detachably coupled over the at least one displacement means (110).

4. The system according to claim 1, wherein the at least one displacement means (110) comprises at least two L-shaped sets of beams connected to each other via a crossing beam at a distal end of the structure, each set comprising one vertical beam connected to one perpendicular beam at a connecting end, each vertical beam fixed to the ground at its non-connecting end, each perpendicular beam being couplable to the structure at its non-connecting end.

5. The system according to claim 4, wherein the perpendicular beams of the at least two sets are connected to each other via a crossing beam at a proximal end of the structure, and the crossing beam is being couplable to the structure (102).

6. The system according to claim 3, wherein the at least one moveable pergola (120) comprises:
at least one section (130; 140) comprising heat regulating means for regulating impinging sun and/or wind; and
at least one travel means configured for allowing the movement of the at least one section,
wherein each section is formed by a frame supporting the heat regulating means, the frame comprising four beams, and the travel means is configured in at least one of the four beams of the frame.

7. The system according to claim 6, wherein the at least one section is a horizontal regulating section (130), and the heat regulating means is configured for regulating sun and/or wind impinging from a substantially vertical direction, wherein the travel means of the horizontal regulating section is configured in any one beam of the frame, or on any two beams, or on any three beams, or on all four beams; or wherein the at least one section is a vertical regulating section (140), and the heat regulating means is configured for regulating sun and/or wind impinging from a substantially lateral direction, wherein the travel means of the vertical regulating section (140) is configured in at least the beam of the frame in contact with the ground, wherein the at least one vertical section (140) is arranged such that its plane is parallel to the plane of the side (104) of the structure (102), or such that its plane is perpendicular to the plane of the side (104) of the structure (102).

8. The system according to claim 7, wherein the at least one moveable pergola (120) comprises any combination of at least one horizontal regulating section (130) and at least one vertical regulating section (140), wherein the at least one vertical regulating section (140) is coupled to the horizontal regulating section (130) at an angle; and the travel means in the horizontal and vertical regulating sections is configured to allow the combined movement of the sections together in the same direction, or the relative movement of the sections with respect to each other in different directions.

9. The system according to claim 8, wherein the at least one moveable pergola (120) comprises one single shared beam for coupling the horizontal regulating section (130) to the at least one vertical regulating section (140), said beam preferably having a rectangular shape or being L-shaped.

10. The system according to claim 6, wherein the heat regulating means comprises a plurality of slats separated from each other or a sheet of material with a plurality of openings, or a sheet of material without openings, wherein each slat from the plurality of slats has an ellipsoidal or trapezoidal shape, preferably comprising wings on the ends, or wherein each slat from the plurality of slats is fixed or moveable.

11. The system according to claim 6, wherein the heat regulating means comprises at least one solar panel (510) for collecting impinging solar energy.

12. The system according to any of the preceding claims, wherein the travel means comprise wheels (1220; 1310; 1410) and rails (1210; 1320; 1420) with complementary profiles.

13. The system according to claim 12, wherein the rail of the travel means of the at least one vertical regulating section (140) has a convex profile, whereas the rail of the travel means of the horizontal regulating section (130) is a hollow rail that allows the insertion of the wheels and a hanging fastening of the horizontal regulating section.

14. The system according to claim 12, wherein the moving end of the horizontal regulating section (130) comprises first and second travel means that engage with complementary support elements of the displacement means (110).

15. The system according to claim 1, wherein the system comprises a plurality of moveable pergolas of step-wise differing dimensions configured to be stored under, or partially overlapping, each other.

## Patentansprüche

1. System (100) zur Wärme- und/oder Lichtregulierung, wobei das System an eine Seite (104) einer Struktur (102), wie eines Gebäudes, koppelbar ist, wobei das System Folgendes umfasst:
mindestens ein Verschiebungsmittel (110), das an der Seite der Struktur befestigt werden kann; und
mindestens eine bewegliche Pergola (120), die abnehmbar mit dem mindestens einen Verschiebungsmittel verbunden ist;
wobei das mindestens eine Verschiebungsmittel konfiguriert ist, um die Verschiebung der mindestens einen beweglichen Pergola in eine seitliche Richtung (185) sowie in eine senkrechte (180) Richtung zur Seite der Struktur zu ermöglichen, wobei das mindestens eine Verschiebungsmittel einen oberen Abschnitt umfasst, wobei der obere Abschnitt Folgendes umfasst:
mindestens einen Querbalken, der parallel zur Seite der Struktur verläuft und konfiguriert ist, um mit der Pergola zu koppeln und deren seitliche Bewegung zu ermöglichen; und
mindestens einen senkrechten Balken, der senkrecht zur Seite der Struktur verläuft und konfiguriert ist, um mit der Pergola zu koppeln und deren senkrechte Bewegung zu ermöglichen.

2. System nach Anspruch 1, wobei das mindestens eine Verschiebungsmittel (110) konfiguriert ist, um sich in oder auf der Struktur zu erstrecken.

3. System nach Anspruch 2, wobei die mindestens eine bewegliche Pergola abnehmbar unter dem mindestens einen Verschiebungsmittel (110) gekoppelt ist, oder wobei die mindestens eine bewegliche Pergola abnehmbar über dem mindestens einen Verschiebungsmittel (110) gekoppelt ist.

4. System nach Anspruch 1, wobei das mindestens eine Verschiebungsmittel (110) mindestens zwei L-förmige Balkensätze umfasst, die über einen Querbalken an einem distalen Ende der Struktur miteinander verbunden sind, wobei jeder Satz einen vertikalen Balken umfasst, der an einem verbindenden Ende mit einem senkrechten Balken verbunden ist, wobei jeder vertikale Balken an seinem nicht verbindenden Ende am Boden befestigt ist, wobei jeder senkrechte Balken an seinem nicht verbindenden Ende mit der Struktur gekoppelt werden kann.

5. System nach Anspruch 4, wobei die senkrechten Balken der mindestens zwei Sätze über einen Querbalken an einem proximalen Ende der Struktur miteinander verbunden sind und der Querbalken mit der Struktur (102) gekoppelt werden kann.

6. System nach Anspruch 3, wobei die mindestens eine bewegliche Pergola (120) umfasst:
mindestens ein Abschnitt (130; 140), der wärmeregulierende Mittel zum Regulieren der auftreffenden Sonne und/oder des Windes umfasst; und
mindestens ein Laufmittel, das konfiguriert ist, um die Bewegung des mindestens einen Abschnitts zu ermöglichen,
wobei jeder Abschnitt durch einen Rahmen gebildet wird, der die Wärmeregulierungsmittel trägt, wobei der Rahmen vier Balken umfasst und das Laufmittel in mindestens einem der vier Balken des Rahmens konfiguriert ist.

7. System nach Anspruch 6,
wobei der mindestens eine Abschnitt ein horizontaler Regulierungsabschnitt (130) ist und das Wärmeregulierungsmittel zum Regulieren von Sonne und/oder Wind, die/der aus einer im Wesentlichen vertikalen Richtung auftrifft, konfiguriert ist, wobei das Laufmittel des horizontalen Regulierungsabschnitts in einem Balken des Rahmens oder auf zwei beliebigen Balken oder auf drei beliebigen Balken oder auf allen vier Balken konfiguriert ist;
oder wobei der mindestens eine Abschnitt ein vertikaler Regulierungsabschnitt (140) ist und das Wärmeregulierungsmittel zum Regulieren von Sonne und/oder Wind, die/der aus einer im Wesentlichen seitlichen Richtung auftrifft, konfiguriert ist, wobei das Laufmittel des vertikalen Regulierungsabschnitts (140) in mindestens dem Träger des Rahmens in Kontakt mit dem Boden konfiguriert ist, wobei der mindestens eine vertikale Abschnitt (140) so angeordnet ist, dass seine Ebene parallel zur Ebene der Seite (104) der Struktur (102) ist, oder so, dass seine Ebene senkrecht zur Ebene der Seite (104) der Struktur (102) ist.

8. System nach Anspruch 7, wobei die mindestens eine bewegliche Pergola (120) eine beliebige Kombination aus mindestens einem horizontalen Regulierungsabschnitt (130) und mindestens einem vertikalen Regulierungsabschnitt (140) umfasst,
wobei der mindestens eine vertikale Regulierungsabschnitt (140) in einem Winkel mit dem horizontalen Regulierungsabschnitt (130) gekoppelt ist; und
die Laufmittel in den horizontalen und vertikalen Regulierungsabschnitten konfiguriert sind, um die kombinierte Bewegung der Abschnitte zusammen in die gleiche Richtung oder die relative Bewegung der Abschnitte zueinander in unterschiedliche Richtungen zu ermöglichen.

9. System nach Anspruch 8, wobei die mindestens eine bewegliche Pergola (120) einen einzigen gemeinsamen Balken zum Koppeln des horizontalen Regulierungsabschnitts (130) mit dem mindestens einen vertikalen Regulierungsabschnitt (140) umfasst, wobei der Balken vorzugsweise eine rechteckige Form aufweist oder L-förmig ist.

10. System nach Anspruch 6, wobei das Wärmeregulierungsmittel eine Vielzahl von voneinander getrennten Lamellen oder eine Materialbahn mit einer Vielzahl von Öffnungen oder eine Materialbahn ohne Öffnungen umfasst, wobei jede Lamelle aus der Vielzahl von Lamellen eine ellipsoide oder trapezförmige Form aufweist, die vorzugsweise Flügel an den Enden umfasst, oder wobei jede Lamelle der Vielzahl von Lamellen fest oder beweglich ist.

11. System nach Anspruch 6, wobei das Wärmeregulierungsmittel mindestens ein Solarpaneel (510) zum Sammeln auftreffender Sonnenenergie umfasst.

12. System nach einem der vorhergehenden Ansprüche, wobei die Laufmittel Räder (1220; 1310; 1410) und Schienen (1210; 1320; 1420) mit komplementären Profilen umfassen.

13. System nach Anspruch 12, wobei die Schiene des Laufmittels des mindestens einen vertikalen Regulierungsabschnitts (140) ein konvexes Profil aufweist, während die Schiene des Laufmittels des horizontalen Regulierungsabschnitts (130) eine hohle Schiene ist, welche die Einführung der Räder und eine Hängebefestigung des horizontalen Regulierungsabschnitts ermöglicht.

14. System nach Anspruch 12, wobei das bewegliche Ende des horizontalen Regulierungsabschnitts (130) erste und zweite Laufmittel umfasst, die mit komplementären Trägerelementen eines Verschiebungssystems (110) in Eingriff treten.

15. System nach Anspruch 1, wobei das System eine Vielzahl von beweglichen Pergolen mit stufenweise unterschiedlichen Abmessungen umfasst, die konfiguriert sind, um untereinander oder teilweise überlappend gelagert werden können.

## Revendications

1. Système (100) de régulation de la chaleur et/ou de la lumière, le système pouvant être couplé à un côté (104) d'une structure (102), telle qu'un bâtiment, le système comprenant :
au moins un moyen de translation (110) pouvant être fixé sur le côté de la structure ; et
au moins une pergola mobile (120) couplée de manière amovible audit au moins un moyen de translation ;
dans lequel l'au moins un moyen de translation est configuré pour permettre la translation de l'au moins une pergola mobile dans une direction latérale (185) ainsi que dans une direction perpendiculaire (180) au côté de la structure, l'au moins un moyen de translation comprenant une section supérieure, la section supérieure comprenant :
au moins une poutre transversale s'étendant parallèlement au côté de la structure et configurée pour se coupler avec la pergola permettant son mouvement latéral ; et
au moins une poutre perpendiculaire s'étendant perpendiculairement au côté de la structure et configurée pour se coupler avec la pergola permettant son mouvement perpendiculaire.

2. Système selon la revendication 1, dans lequel l'au moins un moyen de translation (110) est configuré pour s'étendre dans ou au-dessus de la structure.

3. Système selon la revendication 2, dans lequel l'au moins une pergola mobile est couplée de manière amovible sous l'au moins un moyen de translation (110), ou dans lequel l'au moins une pergola mobile est couplée de manière amovible sur l'au moins un moyen de translation (110).

4. Système selon la revendication 1, dans lequel l'au moins un moyen de translation (110) comprend au moins deux ensembles en forme de L de poutres reliées l'une à l'autre par l'intermédiaire d'une poutre transversale à une extrémité distale de la structure, chaque ensemble comprenant une poutre verticale reliée à une poutre perpendiculaire à une extrémité de liaison, chaque poutre verticale fixée au sol à son extrémité de non liaison, chaque poutre perpendiculaire pouvant être couplée à la structure à son extrémité de non liaison.

5. Système selon la revendication 4, dans lequel les poutres perpendiculaires des au moins deux ensembles sont reliées les unes aux autres via une poutre transversale à une extrémité proximale de la structure, et la poutre transversale peut être couplée à la structure (102).

6. Système selon la revendication 3, dans lequel l'au moins une pergola mobile (120) comprend :
au moins une section (130 ; 140) comprenant un moyen de régulation thermique pour réguler l'incidence du soleil et/ou du vent ; et
au moins un moyen de déplacement configuré pour permettre le déplacement de l'au moins une section,
dans lequel chaque section est formée par un cadre supportant le moyen de régulation thermique, le cadre comprenant quatre poutres, et le moyen de déplacement est configuré dans au moins l'une des quatre poutres du cadre.

7. Système selon la revendication 6,
dans lequel l'au moins une section est une section de régulation horizontale (130), et le moyen de régulation thermique est configuré pour réguler le soleil et/ou le vent venant d'une direction sensiblement verticale, dans lequel le moyen de déplacement de la section de régulation horizontale est configuré dans l'une quelconque poutre du cadre, ou sur deux poutres quelconques, ou sur trois poutres quelconques, ou sur l'ensemble des quatre poutres ;
ou dans lequel l'au moins une section est une section de régulation verticale (140), et le moyen de régulation thermique est configuré pour réguler le soleil et/ou le vent venant d'une direction sensiblement latérale, dans lequel le moyen de déplacement de la section de régulation verticale (140) est configuré dans au moins la poutre du cadre en contact avec le sol, dans lequel l'au moins une section verticale (140) est agencée de sorte que son plan est parallèle au plan du côté (104) de la structure (102), ou de sorte que son plan est perpendiculaire au plan du côté (104) de la structure (102).

8. Système selon la revendication 7, dans lequel l'au moins une pergola mobile (120) comprend toute combinaison d'au moins une section de régulation horizontale (130) et d'au moins une section de régulation verticale (140),
dans lequel l'au moins une section de régulation verticale (140) est couplée à la section de régulation horizontale (130) selon un angle ; et
le moyen de déplacement dans les sections de régulation horizontale et verticale est configuré pour permettre le mouvement combiné des sections entre elles dans la même direction, ou le mouvement relatif des sections les unes par rapport aux autres dans des directions différentes.

9. Système selon la revendication 8, dans lequel l'au moins une pergola mobile (120) comprend une seule poutre partagée pour coupler la section de régulation horizontale (130) à l'au moins une section de régulation verticale (140), ladite poutre ayant de préférence une forme rectangulaire ou de L.

10. Système selon la revendication 6, dans lequel le moyen de régulation thermique comprend une pluralité de lattes séparées les unes des autres, ou une feuille de matériau avec une pluralité d'ouvertures, ou une feuille de matériau sans ouvertures, dans lequel chaque latte de la pluralité de lattes a une forme ellipsoïdale ou trapézoïdale, comprenant de préférence des ailes aux extrémités, ou dans lequel chaque latte de la pluralité de lattes est fixe ou mobile.

11. Système selon la revendication 6, dans lequel le moyen de régulation thermique comprend au moins un panneau solaire (510) pour collecter l'énergie solaire incidente.

12. Système selon l'une quelconque des revendications précédentes, dans lequel les moyens de déplacement comprennent des roues (1220 ; 1310 ; 1410) et des rails (1210 ; 1320 ; 1420) avec des profils complémentaires.

13. Système selon la revendication 12, dans lequel le rail du moyen de déplacement de l'au moins une section de régulation verticale (140) a un profil convexe, tandis que le rail du moyen de déplacement de la section de régulation horizontale (130) est un rail creux qui permet l'insertion des roues et une fixation en suspension de la seconde section de régulation horizontale.

14. Système selon la revendication 12, dans lequel l'extrémité mobile de la section de régulation horizontale (130) comprend des premier et second moyens de déplacement qui se mettent en prise avec des éléments de support complémentaires d'un moyen de translation (110).

15. Système selon la revendication 1, dans lequel le système comprend une pluralité de pergolas mobiles de dimensions différentes par étapes configurées pour être stockées les unes sous les autres ou se recouvrant partiellement les unes les autres.
